**Europäisches Patentamt**

(19) **European Patent Office**

**Office européen des brevets**

(11) Publication number: **0 133 878**
**B1**

(12) **EUROPEAN PATENT SPECIFICATION**

(45) Date of publication of patent specification: **14.03.90**

(21) Application number: **84106349.8**

(22) Date of filing: **04.06.84**

(51) Int. Cl.⁵: **A 01 N 63/04,** C 12 N 1/14 //
(A01N63/04, 47:12, 47:04,
41:04, 33:18,
29:02),(C12N1/14, C12R1:885)

(54) **Novel isolates of trichoderma, fungicidal compositions containing said isolates and use thereof.**

(30) Priority: **28.07.83 IL 69368**

(43) Date of publication of application:
**13.03.85 Bulletin 85/11**

(45) Publication of the grant of the patent:
**14.03.90 Bulletin 90/11**

(84) Designated Contracting States:
**AT BE CH DE FR GB IT LI LU NL SE**

(56) References cited:
**EP-A-0 059 176**

**CHEMICAL ABSTRACTS, vol. 89, no. 11, 11th
September 1978, page 125, no. 85691m,
Columbus, Ohio, USA; Y. HENIS et al.:
"Integrated control of Rhizoctonia solani
damping-off of radish: effect of successive
plantings. PCNB, and Trichoderma harzianum
on pathogen and disease" &
PHYTOPATHOLOGY 1978, 68(6)**

(73) Proprietor: **YISSUM RESEARCH
DEVELOPMENT COMPANY OF THE HEBREW
UNIVERSITY OF JERUSALEM
46, Jabotinsky Street P.O. Box 4279
Jerusalem 91042 (IL)**

(72) Inventor: **Chet, Ilan
Shikun Ezrachi
Ness Ziona (IL)**
Inventor: **Sivan, Alex
2/12 Ramat Ben-Zvi
Ness Ziona 70400 (IL)**
Inventor: **Elad, Yigal
Kibbutz Netzer
Sireni (IL)**

(74) Representative: **Henkel, Feiler, Hänzel & Partner
Möhlstrasse 37
D-8000 München 80 (DE)**

## EP 0 133 878 B1

(56) References cited:

CHEMICAL ABSTRACTS, vol. 93, no. 3, 21st July 1980, page 209, no. 20603x, Columbus, Ohio, USA; Y. ELAD et al.: "Physical, biological and chemical control integrated for soilborne diseases in potatoes" & PHYTOPATHOLOGY 1980, 70(5), 418-422

COMMONWEALTH AGRICULTURAL BUREAUX, 1983, no. 83303046, Slough, GB; E. MIRKOVA: "Use of Trichoderma harzianum Rifai to control wilt of glasshouse carnation caused by Fusarium oxysporum Schl. f. dianthi" & GRADINARSKA I LOZARSKA NAUKA, vol. 22, no. 1, 1983, pages 65-69;

Idem

## EP 0 133 878 B1

**Description**

Field of the invention

The present invention relates to special strains of *Trichoderma harzianum*, to antifungal compositions, particularly to biological control compositions containing said strains and to methods of protecting plants from soil-borne pathogenic fungi with such compositions.

Background of the invention

Soil-borne pathogenic fungi cause damping off, root-rot, crown-rot and neck-rot in a wide variety of seedling crops. Among these pathogenic fungi are fungi of the genera *Rhizoctonia, Pythium, Sclerotium, Phytophotora* and *Fusarium*. These fungi are capable of attacking and causing extensive damage to many common and commercially important crops, such as beans, tomatoes, cotton, peanuts, potatoes, lettuce and ornamental flowers. *Fusarium* spp. in particular has an extraordinarily wide host range and is capable of attacking many commonly grown and commercially important crops.

Chemical fungicides have been widely used to control these soil-borne pathogens. The use of such chemicals is expensive and may result in ecological damage and in the increased incidence of occupational diseases. One particular problem in controlling *Fusarium* spp. infestation in crops is the fact that most chemical fungicides are not sufficiently effective. Only systemic fungicides result in some positive result, and even these are only partially effective. The method most commonly used today, is soil fumigation with methyl bromide and chloropicrin, at high application rates prior to planting. A promising alternative to such chemical control is the biological control of soil plant pathogens by naturally-occurring microorganisms. These biological control agents may be used alone or in conjunction with lesser amounts of chemical fungicides.

The use of antagonistic microorganisms in controlling plant pathogenic fungi has been the subject of extensive research. A large part of this research has been concerned with myco-parasitism, the parasitism by one fungus of another. One of the most frequently studied mycoparasites in relation to biological control is the genus *Trichoderma*. (Y. Elad et al., 1982, Can. J. Microbiol. 28: 719—725, I. Chet and R. Baker, 1981, Phytopathology 71: 286—290; M. N. Schroth and J. G. Hancock, 1981, Ann. Rev. Microbiology 35: 459—463: Y. Elad, et al., 1981, Plant Disease 65:675—677; Y. Elad, et al., 1980, Phytopathology 70: 119—121; I. Chet et al., 1979, in B. Scippers and W. Gams, eds, "Soil Borne Plant Pathogens", Academic Press, NY, NY; Y. Hadar et al., 1979, Phytopathology 69:64—68; C. Dennis and J. Webster, 1971, Trans. Br. mycol. soc. 57(3), 363—369).

Species or strains of *Trichoderma* may be differentially antagonistic to different species of fungi. (H. D. Wells et al., 1972, Phytopathology 62:442—447). Such differences in antagonism have been found both within and between species of *Trichoderma* (D. K. Bell et al., 1982, Phytopathology 72:379—382).

In addition to such differences in antagonism, it has been determined that the environment in which the interaction occurs also affects the degree of biological control. Antagonism in culture is often not reproducible in the complex environment present in the soil under greenhouse or field conditions. (M. N. Schroth and J. G. Hancock, 1981, Ann. Rev. Microbial. 35:453—76). As a result tests made under non-soil culture conditions are not truly indicative of the potential for use of the *Trichoderma* isolate as a biological control agent.

Due to the significant differences in antagonism of *Trichoderma* isolates to various pathogens under different environmental conditions, researchers have concentrated their efforts on searching for *Trichoderma* antagonists against specific disease causing plant pathogenic fungi. The likelihood of finding a specific biological antagonist with a wide range of antagonism under field conditions to several species of plant pathogens was considered remote. (D. K. Bell et al., 1982, Phytopathology 72:379—382).

Summary of the invention

Novel mycoparasite strains of the species *Trichoderma harzianum* has been discovered which are fungicidally active against pathogenic fungi of the genera *Pythium, Rhizoctonia, Sclerotium* and *Fusarium*. These strains are useful in controlling plant diseases such as damping-off, crown-rot, root-rot and neck-rot, which are caused by soil-borne pathogenic fungi.

*T. harzianum* T-315 (ATCC No. 20671) possesses resistance to chemical pesticides which would kill or retard the growth of other fungi. Such pesticides include PCNB, previcur, captan and Dexon®, but are not limited to this group. *T. harzianum* T-315, (ATCC No. 20671) also possesses resistance to soil sterilants, such as methyl bromide. Resistance to such chemical antagonists enables the invention to be used in integrated chemical and biological control of plant pathogens.

This invention also concerns a mycoparasite of the strain *Trichoderma harzianum* Rifai T-35 (ATCC No. 20691) which is useful as a biological control agent, having fungicidal activity against pathogenic fungi of the genus *Fusarium* or mutants thereof. *T. harzianum* T-35 (ATCC No. 20691) possesses significant fungicidal activity against *Fusarium* spp., and is especially useful in the control of *F. oxysporum*, specifically *F. oxysporum* f. sp. *vasinfectum* and f. sp. *melonis*.

Either or both of the T-315 or T-35 strains of *Trichoderma harzianum* may be mixed with a suitable agriculturally acceptable carrier to produce a fungicidally active, biocontrol composition useful in controlling diseases caused by soil-borne plant pathogenic fungi. This biocontrol composition may also contain a food base for the mycoparasite or the carrier itself may also serve as the food base.

The invention also concerns methods of using this biocontrol composition as a fungicide. Effective amounts of the biocontrol composition are applied to or incorporated in soil in which plant seedlings are grown. Potted seedlings may also be protected from attack by soil-borne pathogenic fungi by potting them in soil containing an effective amount of the biocontrol composition.

In a specific embodiment of the invention, a chemical pesticide is included in the biocontrol composition containing the T-315 strain. Alternatively, the chemical pesticide is applied to or incorporated into soil containing the biocontrol composition. The soil in another embodiment of the invention is sterilized, e.g., with methyl bromide, before the application of a biocontrol composition containing either or both of the T-35 and T-315 strains.

In other embodiments of the invention the biocontrol composition also contains a suitable agriculturally acceptable adhesive. This biocontrol composition is used to coat fruits and plant seeds in order to protect them from diseases caused by soil-borne pathogenic fungi.

Brief description of the drawings

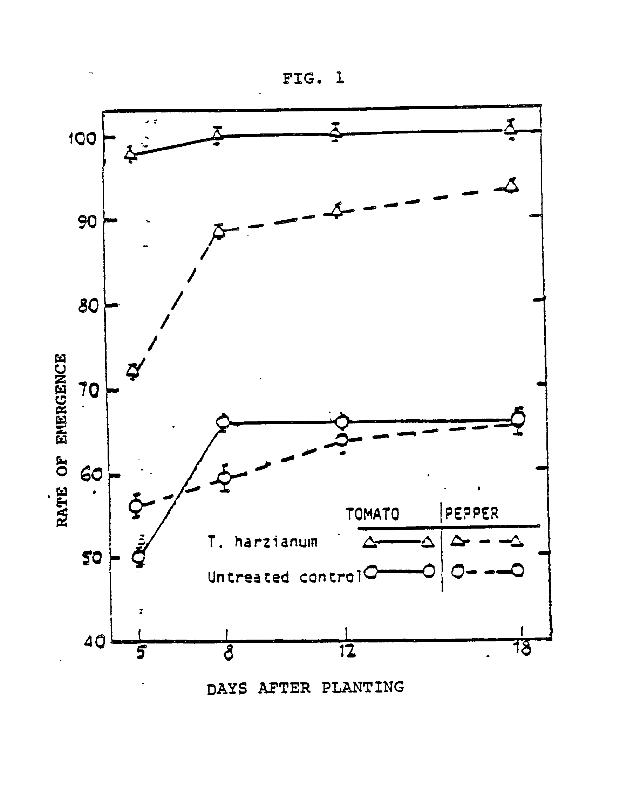

Fig. 1 A comparison of the rate of emergence of tomato and pepper seedlings grown in peat naturally infested with *P. aphanidermatum* with the rate of emergence of tomato and pepper seedlings grown in peat naturally infested with *P aphanidermatum* containing 20% by volume of *T. harzianum* T-315 (ATCC 20671) incorporated therein.

Detailed description of the invention

Novel mycoparasite strains of the species *Trichoderma harzianum* have been discovered which are fungicidally active against pathogenic fungi of the species *Pythium aphanidermatum, Rhizoctonia solani, Sclerotium rolfsii* and *Fusarium* spp. One novel strain of this mycoparasite was isolated from a soil naturally infested with *Pythium* species and identified according to the critiera of Rifai, (Rifai M, 1969, Mycol. Pap 116). It has been cultured in a biologically pure form. The preferred strain *Trichoderma harzianum* Rifai T-315, is deposited with the American Type Culture Collection, Rockville, Maryland 20852, pursuant to the provisions of the Budapest Treaty on the International Recognition of the Deposit of Microorganisms for the Purposes of Patent Procedure under accession number ATCC 20671.

*T. harzianum* T-315, (ATCC No. 20671), and mutants derived therefrom may be used to control plant diseases such as damping-off, root-rot, crown-rot and neck-rot, which are caused by the fungi, *R. solani, P. aphanidermatum* (Edson) Fitz, *S. rolfsii* and *Fusarium* spp.

In addition to fungicidal activity and long-term survivability, *T. harzianum* T-315, (ATCC No. 20671) possesses resistance to several chemical pesticides which would kill or retard the growth of other fungi. Such pesticides include, but are not limited to, the fungicides: Dexon® (P - dimethylaminobenzendiazo sodium sulfonate) and previcur (S - ethyl - N - [3 - dimethylaminopropyl] thiocarbamate), which are commonly used to control fungi of the genus *Pythium,* Terraclor® (PCNB - Pentachloronitrobenzene) which is commonly used to control fungi of the genus *Rhizoctonia*, and captan (N - [trichloromethyl thio] - 4 - cyclohexene - 1,2 - dicarboximide). *T. harzianum* T-315, (ATCC No. 20671) also possesses resistance to chemical soil sterilants, such as methyl bromide which is commonly used to control soil-borne pests such as *Fusarium* spp. and nematodes.

This high degree of resistance to chemical antagonists enables *T. harzianum* T-315, (ATCC No. 20671) to be used in integrated biological and chemical control of pathogenic fungi. In a specific embodiment of this invention *T. harzianum* T-315, (ATCC No. 20671), is applied to the soil together with sub-lethal doses of previcur or terraclor in order to control *R. solani* and *P. aphanidermatum*. This integrated control method prevents the common and undesirable phenomenon of enhanced *R. solani* disease incidence upon exclusively controlling *P. aphanidermatum* with previcur, or alternatively the enhanced *P. aphanidermatum* disease incidence upon exclusively controlling *R. solani* with terraclor. This phenomenon which results from the mutual antagonism of *R. solani* and *P. aphanidermatum* is controlled by *T. harzianum* T-315 (ATCC No. 20671) which possesses fungicidal activity against both of these fungi in the same environment.

The novel *T. harzianum* strain of this invention is capable of simultaneously controlling the fungi *S. rolfsii* and *Fusarium* spp. in addition to *R. solani* and *P. aphanidermatum*. In other embodiments of this invention *T. harzianum* T-315 (ATCC No. 20671), can be used as a biocontrol agent in combination with sub-lethal doses of other chemical antagonists to which it is resistant to control plant diseases caused by a wide range of plant pathogens.

One other embodiment of the invention, is the use of *T. harzianum* T-315, (ATCC No. 20671) in conjunction with a soil sterilant such as methyl bromide. The soil is first fumigated with the soil-sterilant, and then the biocontrol agent is applied. Fumigation prior to the application of the biocontrol agent, allows the *T. harzianum* T-315, (ATCC No. 20671) to establish itself in the soil and thus control of plant pathogens and crop yields are enhanced.

In addition to its wide range of antagonism and resistance to chemical pesticides, *T. harzianum* T-315 (ATCC No. 20671) is capable of long term survivability and of controlling diseases caused by soil-borne pathogens throughout a 20°C to 35°C temperature range. These additional characteristics make the present

4

invention a versatile biocontrol agent suitable for application in semi-arid as well as temperate agricultural zones.

In another aspect of this invention, another mycoparasite of the species *Trichoderma harzianum* was found to be fungicidally active against pathogenic fungi of the genus *Fusarium* or mutants thereof. This mycoparasite strain was isolated from a soil naturally infested with *Fusarium* spp. and was given the number T-35. It has been cultured in a biologically pure form. The preferred strain *Trichoderma harzianum* Rifai T-35, is deposited with the American Type Culture Collection, Rockville, Maryland 20852, pursuant to the provisions of the Budapest Treaty on the International Recognition of the Deposit of Microorganisms for the Purposes of Patent Procedure under accession number ATCC 20691.

This isolate exhibits greater antifungal activity against *Fusarium* spp. than any other *Trichoderma* species isolated to date, including the *T. harzianum* reported by J. J. Marois et al., Phytopathology, 1981, Vol. 71, pages 1257—1260.

While the *Trichoderma* spp. T-35 (ATCC No. 20691) did not attack *F. oxysporum* f. sp. *vasinfectum* or f. sp. *melonis* under laboratory conditions, it was surprisingly found to be quite effective against these fungi in greenhouse tests and preliminary field trials. Indeed, compositions containing the T-35 strain are effective in protecting most crops affected by the fungus *Fusarium* spp., especially cotton and melons.

A particular feature of the present invention is that *Trichoderma* spp. T-35 (ATCC No. 20691) controls diseases caused by *Fusarium* spp. throughout a 20°C to 35°C temperature range. This characteristic makes this embodiment a versatile biocontrol agent suitable for application in semi-arid as well as in temperate agricultural zones.

The *Trichoderma* spp. can be propagated by any of the known procedures from the pure culture. One such method is described by Elad et al. (1981) Plant Diseases, 65: (8), 675—677.

There are a variety of possible methods of applying the present invention. One method is the application of conidia or chlamydospores or mixtures of the two, from one or both of *T. harzianum* T-315 (ATCC No. 20671) and T-35 (ATCC No. 20691) directly to the soil. The conidia of *Trichoderma* spp. are the active antagonistic structures of the fungus, whereas the chlamydospores are the fungal long-term survivable resting structures. Direct application of the mycoparasite, however, seems to be less effective than the application of a biocontrol composition which contains an agriculturally acceptable carrier. The biocontrol compositions may be applied directly to the soil in which the plant is growing, or the seedling itself may be potted in soil containing an effective amount of the biocontrol composition.

These biological compositions may be in a solid or a liquid form and may include other adjuvants such as emulsifiers, suspending agents and sticking agents. The solid compositions may be in the form of dusts, granules, or wettable powders, whereas the liquid compositions may be in the form of aqueous or non-aqueous media, in solution, suspension, dispersion or concentrate form.

The quantity of spores, conidia or chlamydospores, of the mycoparasite(s) in the composition should be at least $10^5$ and preferably above $10^7$ spores per gram of composition. Propagation of these spores depends upon growth conditions within the composition or in the soil to which it is applied. Such factors as the storage time of the composition may have an effect on the growth conditions of the composition and therefore it is preferred to prepare compositions which contain a suitable food base.

In certain embodiments of the invention the carrier may constitute wholly or in part a food base for the mycoparasite. Such food bases are known to those of ordinary skill in the art and may constitute agricultural waste products. Some suitable food bases include wheat bran, peat, milled corn cobs, ground wheat straw, and ground cotton straw. A preferred food base is 1:1 mixture of wheat bran and peat. These food bases are usually sterilized and moistened. The food base and carrier provide the mycoparasite with sufficient nutrients and a favorable micro-environment facilitating its establishment and long term survival in the soil.

Embodiments of the biocontrol composition may also contain another pesticide. In biocontrol compositions containing *T. harzianum* T-315 (ATCC No. 20671), the pesticide may be a chemical pesticide to which the T-315 strain is resistant, e.g., Dexon®, Terraclor®, previcur or captan. The pesticide may also be another biocontrol agent such as a mycoparasite of a different species of *Trichoderma*. Thus the biocontrol composition may contain a mixture of *T. harzianum* T-315 (ATCC No. 20671) and other biocompatible antifungal agents, e.g., *T. harzianum* T-35 (ATCC No. 20691) to afford broad spectrum antifungal protection.

For application in the fields, ten to five hundred grams and preferably fifty to one hundred grams (dry weight), of the biocontrol composition are applied to each square meter of soil. The biocontrol composition is spread in the seeding rows and then incorporated into the soil. In the greenhouse, the biocontrol composition is applied at the rate of one to ten grams (dry weight) per kilogram of soil and preferably at the rate of five grams per kilogram of soil.

In a specific embodiment of the invention, the biocontrol composition also contains a suitable agriculturally acceptable adhesive, e.g., Pelgel® (Nitragin, Wisc. USA). This biocontrol composition containing the adhesive can be applied to seeds as a seed coating before planting, and also to fruits in order to protect them from diseases caused by soil-borne pathogens.

The range of host plants that are subject to attack by the soil-borne pathogens *P. aphanidermatum, S. rolfsii, R. Solani* and *Fusarium* spp. is very broad. This invention is effective in controlling diseases caused by these soilborne pathogens over this wide range, and is effective in protecting such plants as beans, peas, tomatos, cucumbers, peppers, cotton, peanuts, potatoes, lettuce, strawberries, tobacco, forest trees, ornamentals, carnations, irises, *Gypsophila*, chick peas, carrots, eggplants and other seedlings.

Examples

Example 1

A *Trichoderma* species was isolated from a soil naturally infested with *Pythium* species as follows: 1 g sample of the soil was suspended in 100 g water and shaken at 400 rpm. Portions of the liquid were diluted with a 0.01% bacto-agar solution three times and 0.1 ml of the serial dilutions were grown on selective media agar plates (Elad et al., Phytoparasitica, 1981, Vol. 9, pages 59—67). The resultant pure strain was named T-315. This isolate was grown for fourteen days at 30°C on a 1:1 wheat bran: peat, tap water mixture (40% water) which was autoclaved for one hour at 121°C on two successive days.

Example 2

*T. harzianum* T-315 (ATTC No. 20671) was grown on agricultural wastes as food bases and was incubated at the temperature of 30°C for a week and then tested for growth rate. Survivability was tested after incubation of one year at room temperature. Growth vigor and survivability are expressed as number of viable propagules/g. preparation (dry weight) and are shown in Table 1.

TABLE 1

Growth vigor and survivability of *T. harzianum* T-315 (ATCC No. 20671) grown on agricultural wastes

| Food base | No. of viable propagules/g composition (dry weight)[1] | | |
|---|---|---|---|
| | After 7 days at 30°C | After 1 yr storage at room temperature | |
| | | No Chl.[2] | Chl.[2] supplemented |
| Wheat Bran: peat (1:1) (v/v) | $5.1 \times 10^9$ | $4.4 \times 10^8$ | $9.5 \times 10^8$ |
| Wheat bran | $8.0 \times 10^8$ | $1.2 \times 10^7$ | $2.4 \times 10^7$ |
| Peat | $8.0 \times 10^8$ | $7.3 \times 10^6$ | $8.5 \times 10^6$ |
| Ground peat | $4.5 \times 10^8$ | $2.3 \times 10^7$ | $2.1 \times 10^7$ |
| Ground wheat straw | $4.9 \times 10^8$ | $2.5 \times 10^5$ | $2.2 \times 10^7$ |
| Ground cotton straw | $4.0 \times 10^7$ | $2.1 \times 10^5$ | $2.5 \times 10^5$ |

[1] Intitial no of *T. harzianum* propagules—$4 \times 10^2$ conidia/g substrate

[2] Chl.—Chloramphenicol, 250 mg.

Wheat bran, peat or a mixture of the two appear to be the food bases best utilized by the *Trichoderma*. The other food bases shown are also quite acceptable.

Example 3

*T. harzianum* T-315 (ATCC No. 20671) was incorporated into a composition comprising wheat-bran: peat (1:1) (v/v) (40% (w/w) moistened), hereinafter referred to as *T. harzianum* composition. The composition was applied to sandy-loam soils artificially infested with *Pythium aphanidermatum* and to peat naturally infested with *P. aphanidermatum*, at 5 g composition/kg soil in the greenhouse.

As shown in Table 2, the *T. harzianum* successfully reduced disease levels in a variety of crop seedlings.

TABLE 2

The effect of *T. harzianum* T-315 (ATCC 20671) on the control of diseases caused by *P. aphanidermatum* in cucumbers, tomatoes, peas, beans, peppers and *Gypsophila* cuttings.

| Crops | Artificially infested soil | | Naturally infested peat | |
|---|---|---|---|---|
| | Diseased plants (%) (untreated control) | Diseased plants (%) (treated soil) | Diseased plants (%) (untreated control) | Diseased plants (%) (treated peat) |
| Cucumbers | 91.2 | 27.8 | 85.9 | 48.5 |
| Tomatoes | 36.0 | 14.4 | 76.1 | 3.5 |
| Peas | 77.2 | 8.8 | — | — |
| Beans | 80.6 | 10.2 | — | — |
| Peppers | — | — | 41.7 | 7.3 |
| Gypsophila cuttings | — | — | 97.9 | 33.3 |

Example 4

*T. harzianum* T-315 (ATCC 20671), composition of Example 3 was incorporated into sandy-loam soils which were artificially infested with *R. solani* and *S. rolfsii*, at a rate of 5 g per kg soil. The experiment was carried out in the greenhouse with beans as the test plants.

As can be seen from Table 3, diseases caused by both of these pathogens were controlled by the *Trichoderma*, the reduction of *S. rolfsii* incidence being particularly marked.

TABLE 3

The effect of *T. harzianum* T-315 (ATCC 20671) on the control of *R. solani* and *S. rolfsii* diseases in beans.

| Treatment | Soil infested with *R. solani* | | Soil infested with *S. rolfsii* | |
|---|---|---|---|---|
| | Diseased plants (%) | Disease reduction (%) | Diseased plants (%) | Disease reduction (%) |
| Control | 33.9 A[1] | — | 49.1 A | — |
| *T. harzianum* T-315 (ATCC 20671) | 21.3 B | 37.5 | 12.0 B | 75.6 |

[1] Numbers followed by dissimilar letters; within columns, are significantly different (P=0.05)

Example 5

Sandy-loam soils (pH 7.2) were artificially infested with the pathogen *Sclerotium rolfsii* at the rate of 0.05 g sclerotia/kg soil. Beans (*Phaseolus vulgaris L.*) were used as test plants for the determination of the control efficiency of various preparations of *T. harzianum* T-315 (ATCC 20671) with the foodbases listed below. The experiment was carried out in the greenhouse.

As illustrated in Table 4, all the tested compositions significantly reduced the number of diseased plants. The wheat-bran:peat (1:1) composition was found to be particularly effective.

EP 0 133 878 B1

TABLE 4

The effect of various *T. harzianum* T-315 (ATCC 20671) compositions on the control of *S. rolfsii* in beans.

| Preparation[1] | Diseased plants (%) | Disease reduction (%) |
|---|---|---|
| Control | 63.3 A[2] | |
| Peat | 26.7 B | 57.8 |
| Ground wheat straw | 25.0 B | 60.5 |
| Ground cotton straw | 20.0 B | 68.4 |
| Wheat-bran | 16.7 B | 73.6 |
| Wheat-brand:peat (1:1) (v/v) | 13.3 B | 79.9 |

[1] Each of the listed food-bases was inoculated with a conidial suspension of *T. harzianum* T-315 (ATCC 20671) incubated for 7—10 days in an illuminated chamber at the temperature of 30°C. The moisture level of the above compositions was 40% (w/w). The preparations were incorporated into the soils at the rate of 5 g/kg soil.

[2] Numbers followed by dissimilar letters, within columns, are significantly different (P=0.05).

Example 6

Peat, naturally infested with *P. aphanidermatum*, was seeded with tomato and pepper seeds. *T. harzianum* T-315 (ATCC 20671), was incorporated into the peat to comprise 20% by volume. The experiment was carried out in the greenhouse.

The rate of emergence of tomato and pepper seedlings was greatly improved by the *T. harzianum*, as illustrated in Fig. 1.

Example 7

Cucumber and pea seeds were coated with *T. harzianum* T-315 (ATCC 20671), conidia, using Pelgel® (Nitragin, Wisc., USA) as an adhesive matrix. The coated seeds were seeded in sandy soils artifically infested with *P. aphanidermatum*. The effect of application of the *T. harzianum* as a seed coating on the *Pythium* disease incidence was compared with that of the *T. harzianum* soil treatment.

Both treatments successfully controlled the pathogenic fungus. No significant difference between the two was found as shown.

TABLE 5

The effects of *T. harzianum* T-315 (ATCC 20671) seed coating and soil treatment on *P. aphanidermatum* diseases in peas and cucumbers.

| Treatment | Diseased plants (%) | |
|---|---|---|
| | Cucumber | Pea |
| Control | 27.8 A[1] | 37.8 A |
| T-315 seed coating | 6.7 B | 4.4 B |
| T-315 soil treatment | 8.6 B | 7.0 B |

[1] Numbers followed by dissimilar letters, within columns, are significantly different (P=0.05)

Example 8

Pea seeds coated with *T. harzianum* T-315 (ATCC 20671) conidia were seeded in soil naturally infested with *P. aphanidermatum*. The experiment was carried out in a growth chamber at the constant temperature of 22°C.

The seed coating treatment reduced the disease level by 44% in comparison with the untreated seeds, thus showing the biocontrol capability of *T. harzianum* T-315 (ATCC 20671), even under relatively low temperatures.

8

Example 9

The effect of four commonly used fungicides on the growth rate of *Trichoderma* T-315 (ATCC 20671) was tested in culture. The following fungicides were tested:

Terraclor®—Pentachloronitrobenzene (PCNB) (Olin Chemicals, U.S.A.)

Previcur—S-ethyl N-(3-dimethylaminopropyl) thiocarbamate (Schering A. G., Germany)

Captan—N-(trichloromethyl thio)-4-cyclohexene-1,2-dicarboximide (Makteshim, Israel)

Dexon®—P-dimethylaminobenzene diazo sodium sulfonate (Farbenfabrix Bayer A. G., Germany) T-315 isolate exhibits very high resistance to Terraclor and Previcur, and considerable resistance to Dexon and Captan. The results are presented in Table 6.

TABLE 6

Inhibitory effects on the fungicides Terraclor, Previcur, Captan and Dexon on the vegetative growth of *T. harzianum* T-315 (ATCC 20671)

| Terraclor | | Previcur | |
|---|---|---|---|
| Conc.[1] | Inhib.[2] | Conc.[1] | Inhib.[2] |
| 50 | 29.7D[3] | 1,000 | 6.3B |
| 100 | 53.1C | 1,500 | 8.3B |
| 1,000 | 55.9C | 2,000 | 10.0AB |
| 3,000 | 69.5B | 3,000 | 14.5A |
| 10,000 | 78.5A | | |

| Captan | | Dexon | |
|---|---|---|---|
| Conc.[1] | Inhib.[2] | Conc.[1] | Inhib.[2] |
| 10 | 17.4C | 10 | 11.5B |
| 20 | 21.4C | 100 | 15.0B |
| 100 | 81.5B | 1,000 | 53.1A |
| 1,000 | 98.3A | | |

[1] Concentration of the active ingredient expressed as ppm.

[2] Inhibition of vegetative growth expressed as percent of the untreated control.

[3] Numbers followed by dissimilar letters, within columns, are significantly different (P=0.05).

Example 10

The efficiency of *T. harzianum* T-315 (ATCC 20671) in integrated control, using both a chemical fungicide and the *T. harzianum* T-315 (ATCC 20671) was investigated and compared with the efficacy of the chemical fungicide or the *T. harzianum* preparation alone.

*Gyposphila* cuttings were grown in peat, naturally infested with *Pythium aphanidermatum* and *Rhizoctonia solani* and were tested for disease percentage after various treatments.

*T. harzianum* alone was found to be efficient in controlling both *P. aphanidermatum* and *R. solani*. It was found to be competent, as well for integrated control since it provides a marked improvement when used together with the fungicide previcur. Integrated treatment reduced both *Pythium* and *Rhizoctonia* diseases, while application of previcur alone resulted in a reduction of *Pythium* incidence but an increase in *Rhizoctonia* incidence even beyond the level of the control. Results are shown below in Table 7.

## TABLE 7

Effects of *T. harzianum* T-315 (ATCC 20671) and the Integration of same with the Fungicide previcur on *P. aphanidermatum* and *R. solani* diseases in *Gypsophila* cuttings.

| | Diseased plants[1] | | |
| --- | --- | --- | --- |
| | Total diseased plants (%) | *R.*[2] diseased plants (%) | *P.*[2] diseased plants (%) |
| Control | 97.9A[4] | 44.3B | 53.6A |
| *T. harzianum* (T-315) | 61.8C | 37.2C | 24.6B |
| Previcur[3] | 80.5B | 62.9A | 17.6B |
| *T. harzianum* (T-315)+previcur | 22.4D | 15.8D | 6.6C |

[1] The number of the diseased plants was determined two weeks after planting

[2] *R. Rhizoctonia solani; P. Pythium aphanidermatum.*

[3] Previcur was applied at a rate of 1.5 ml/l water/m$^2$

[4] Numbers followed by dissimilar letters within columns are significantly different (P=0.05).

## Example 11

Cotton was planted in soil infested with *Fusarium* spp. *T. harizianum* T-315 (ATCC No. 20671) was incorporated into the soil as a composition comprising wheat bran:peat (1:1) v/v, at 5 grams of composition per kilogram of soil. The experiment was carried out in greenhouses. After thirty days the plants were inspected. The results are shown in Table 8 below.

## TABLE 8

The effect of *T. harzianum* T-315, (ATCC 20671), on *Fusarium* spp.

| Treatment | Diseased plants % | Disease reduction % |
| --- | --- | --- |
| Control | 41.3 | — |
| T-315 | 14.8 | 64.2 |

## Example 12

A *Trichoderma* species was isolated by the method of Example 1 from a soil naturally infested with *Fusarium* spp. which attacks cotton. The resultant pure strain was designated T-35. This isolate was grown for 14 days at 30°C on a 1:1 wheat bran: peat, tap water mixture (40% water) which was autoclaved for one hour at 121°C on two successive days.

## Example 13

*Trichoderma* spp. (T-35 ATCC No. 20691) was grown on agricultural wastes as food bases and was incubated at the temperature of 30°C for a week and then tested for growth rate. Growth vigor and survivabilty were quite satisfactory.

Wheat bran, peat or a mixture of the two appear to be the food bases best utilized by the *Trichoderma*. Other food bases, however, are also quite acceptable.

*Trichoderma* spp. T-35 (ATCC No. 20691) was incorporated into a composition comprising wheat-bran:peat (1:1) (v/v) (40% (w/v) moistened), hereinafter referred to as T-35 composition. The composition was applied to soils at 5 g composition/kg soil in the greenhouse.

## Example 14

Melon seed were coated with *Trichoderma* spp. T-35 (ATCC No. 20691) conidia, using Pelgel® (Nitragin, Wisc. USA) as an adhesive matrix. The coated seeds were planted in greenhouses in soil from Rehovot artificially infested by the addition thereto of $3\times10^9$ microconidia *Fusarium* spp. per kilogram soil. The treated seeds effectively prevented infestation of the crop with *Fusarium oxysporum* f. sp. *melonis* compared to an untreated control, as shown in Table 9.

# EP 0 133 878 B1

## TABLE 9

### Effect of *Trichoderma* spp. T-35 (ATCC No. 20691) seed coating on the control of *Fusarium spp.* in melon plants. (after 24 days)

| Treatment | Diseased plants % | Disease reduction % |
|---|---|---|
| Control | 76.4 | — |
| T-35 coated seeds | 15.8 | 79.3 |

Example 15

Melon seeds coated as in Example 14 were planted in greenhouses in heavy soil taken from Kafar Manda which was naturally infested with *Fusarium* spp. The effectiveness of T-35 against *Fusarium oxysporum* f. sp. *melonis* after 14 and 24 days as shown in Table 10.

## TABLE 10

| Treatment | 14 days | | 24 days | |
|---|---|---|---|---|
| | Diseased plants % | Disease reduction % | Diseased plants % | Disease reduction % |
| Control | 9.3 | — | 23.8 | — |
| T-35 coated seeds | 0 | 100 | 7.8 | 67.2 |

Example 16

Soil from Rehovot was sterilized by autoclaving for one hour. The soil was infested artificially with $3 \times 10^9$ microconidia Fusarium oxysporum f. sp. *vasinfectum* per kilogram soil. *Trichoderma* spp. T-35 was incorporated into the soil as a composition comprising wheat bran: peat (1:1) v/v (5 gram composition per kg. soil). The experiment was carried out with cotton in greenhouses. The results are tabulated in Table 11.

## TABLE 11

### Effect of *Trichoderma* spp. T-35 (ATCC No. 20691) compositions comprising wheat bran: peat on *Fusarium* spp. in cotton planted in sterilized soil (30 days after planting)

| Treatment | Diseased plants % | Disease reduction % |
|---|---|---|
| Control | 52.7 | — |
| Compositions containing T-35 | 5.6 | 89.4 |

Example 17

Natural soil of Rehovot was infested with *Fusarium* spp. as in Example 16 and a composition comprising *Trichoderma* spp. in wheat bran:peat 1:1 (v/v) was incorporated into the soil (5 g. per kg soil). Cotton was planted in this soil in greenhouses, and the plants were inspected after 17, 20 and 26 days for disease. The results are shown in Table 12.

## TABLE 12

### Effect of composition of *Trichoderma* spp. T-35 (ATCC No. 20691) in wheat bran: peat on *Fusarium* spp. in cotton plants in natural infested soil

| Treatment | 17 days | | 20 days | | 26 days | |
|---|---|---|---|---|---|---|
| | Diseased plants % | Disease reduction % | Diseased plants % | Disease reduction % | Diseased plants % | Disease reduction % |
| Control | 36 | — | 50 | — | 75 | — |
| Composition containing T-35 | 0 | 100 | 5.3 | 89.4 | 10.5 | 86.0 |

Example 18

A *Trichoderma* spp. T-35 (ATCC No. 20691) composition comprising wheat bran and peat 1:1 (v/v) was incorporated into soil containing *Fusarium* spp. as in Example 5. Cotton seeds were planted and after 30 days the plants were inspected for infestation. Then the plants were uprooted and the soil was mixed and replanted with more cotton seeds. The second crop was again evaluated for infestation after 30 days. The results are shown in Table 13.

TABLE 13

Effect of T-35 composition on *Fusarium* spp. in cottom upon repeated planting

| | 1st plating | | 2nd planting | |
|---|---|---|---|---|
| Treatment | Diseased plants % | Disease reduction % | Diseased plants % | Disease reduction % |
| Control | 80.0 | — | 90.9 | — |
| T-35 composition | 31.7 | 60.4 | 29.3 | 67.8 |

Example 19

Comparative tests were conducted to show the effect of *Trichoderma* spp. T-35 (ATCC No. 20691) against *Fusarium spp.* compared with the effect of *T. harzianum* T-315 (ATCC No. 20671). The latter is very effective against the pathogen *P. aphanidermatum* and other fungi as disclosed above.

Cotton was planted in soil infested with *Fusarium* spp. and treated with the respective *Trichoderma* compositions (wheat bran:peat 1:1 (v/v) as in Example 16. After 30 days the plants were inspected. The results are shown in Table 14.

TABLE 14

Comparative effect of *Trichoderma* spp. T-35 (ATCC No. 20691) and *T. harzianum* T-315 on *Fusarium* spp. in cotton plants (30 days after planting)

| Treatment | Diseased plants % | Disease reduction % |
|---|---|---|
| Control | 41.3 | — |
| T-35 | 1.9 | 95.4 |
| T-315 | 14.8 | 64.2 |

Although we see from this experiment that the T. *harzianum* T-135 (ATCC No. 20671) partially controls *Fusarium* spp., the *Trichoderma* spp. T-35 (ATCC No. 20691) is quite superior in this respect.

**Claims**

1. A mycoparasite of the species *Trichoderma harzianum* useful as a biological control agent and having fungicidal activity against pathogenic fungi at least of the genus *Fusarium* selected from *Trichoderma harzianum* Rifai T-315 (ATCC No. 20671) and *Trichoderma harzianum* Rifai T-35 (ATCC No. 20691) or a mutant thereof.

2. A mycoparasite according to Claim 1 in a form of a biologically pure, stable culture.

3. A mycoparasite in accordance with Claim 1 additionally having resistance to an amount of a chemical antagonist capable of substantially retarding the growth of or of killing other fungi.

4. A mycoparasite in accordance with Claim 3, wherein the chemical antagonist is a pesticide.

5. A mycoparasite in accordance with Claim 4, wherein the pesticide is a fungicide.

6. A mycoparasite in accordance with Claim 5, wherein the fungicide is pentachloronitrobenzene; N - (trichloromethylthio) - 4 - cyclohexene - 1,2 - dicarbonoximide; P-dimethylaminobenzenediazo sodium sulfonate or S-ethyl N - (3 - dimethylaminopropyl) thiocarbamate.

7. A biocontrol composition comprising an effective amount of a mycoparasite in accordance with one of the Claims 1 to 5 and a suitable agronomically acceptable carrier.

8. A biocontrol composition in accordance with Claim 7, wherein the concentration of the mycoparasite is at least $10^5$ spores per gram of composition.

9. A biocontrol composition in accordance with one of the Claims 7 to 8, wherein the mycoparasite is present in the form of conidia or chlamydospores or mixtures thereof.

10. A biocontrol composition in accordance with one of the Claims 7 to 9, wherein the carrier includes a food base for the mycoparasite.

12

EP 0 133 878 B1

11. A biocontrol composition in accordance with one of the claims 7 to 10, which also comprises a suitable agriculturally acceptable adhesive.

12. A biocontrol composition in accordance with one of the Claims 7 to 11, which also comprises a chemical pesticide.

13. A biocontrol composition in accordance with Claim 12, wherein the chemical pesticide is a fungicide.

14. A biocontrol composition in accordance with Claim 13, wherein the fungicide is pentachloronitrobenzene; N - (trichloromethylthio) - 4 - cyclohexene - 1,2 - dicarboximide; P - dimethylaminobenzendiazo sodium sulfonate or S-ethyl N - (3 - dimethylaminopropyl) thiocarbamate.

15. A biocontrol composition in accordance with one of the Claims 7 to 14, which also comprises another different strain of a mycoparasite.

16. A method of protecting seedlings, fruits or plants seeds from diseases causing by soil-borne pathogenic fungi which comprises incorporating in or applying to the soil in which the seedlings are grown an effective amount of a mycoparasite of Claim 1.

17. A method according to Claim 16 which comprises incorporating or applying an effective amount of the biocontrol composition of one of the Claims 7 to 15.

18. A method of protecting plants, plant seeds, fruits or potted seedlings from diseases caused by *Fusarium* spp. pathogenic fungi which comprises incorporating in or applying to the soil in which seedlings or the plants are grown an effective amount of *Trichoderma harzianum* Rifai T-35 (ATCC No. 20691).

19. A fruit, plant seeds, potted seedlings treated with the method according to one of the claims 7 to 18.

**Patentansprüche**

1. Mycoparasit der Art Trichoderma harzianum, der sich als biologisches Bekämpfungsmittel eignet, eine fungizide Aktivität gegen pathogene Pilze zumindest der Gattung Fasarium aufweist und aus Trichoderma harzianum Rifai T-315 (ATCC Nr. 20671) und Trichoderma harzianum Rifai T-35 (ATCC Nr. 20691) oder einer Mutante derselben besteht.

2. Mycoparasit nach Anspruch 1 in Form einer biologisch reinen stabilen Kultur.

3. Mycoparasit nach Anspruch 1, der zusätzlich gegen eine zur merklichen Hemmung des Wachstums oder Abtötung sonstiger Pilze fähige Menge eines chemischen Antagonisten resistent ist.

4. Mycoparasit nach Anspruch 3, dadurch gekennzeichnet, daß der chemische Antagonist aus einem Pestizid besteht.

5. Mycoparasit nach Anspruch 4, dadurch gekennzeichnet, daß das Pestizid aus einem Fungizid besteht.

6. Mycoparasit nach Anspruch 5, dadurch gekennzeichnet, daß das Fungizid aus Pentachlornitrobenzol, N - (Trichlormethylthio) - 4 - cyclohexen - 1,2 - dicarbonoximid, p - Dimethylaminobenzoldiazo - Natriumsulfonat oder S - Ethyl - N - (3 - dimethylaminopropyl) - thiocarbamat besteht.

7. Biologisches Bekämpfungsmittel mit einer wirksamen Menge eines Mycoparasiten nach einem der Ansprüche 1 bis 5 und einem geeigneten landwirtschaftlich akzeptablen Träger.

8. Biologisches Bekämpfungsmittel nach Anspruch 7, dadurch gekennzeichnet, daß die Konzentration des Mycoparasiten mindestens $10^5$ Sporen/g des Mittels beträgt.

9. Biologisches Bekämpfungsmittel nach einem der Ansprüche 7 und 8, dadurch gekennzeichnet, daß der Mycoparasit in Konidien- und/oder Chlamydosporenform vorliegt.

10. Biologisches Bekämpfungsmittel nach einem der Ansprüche 7 bis 9, dadurch gekennzeichnet, daß der Träger eine Nährmittelgrundlage für den Mycoparasiten enthält.

11. Biologisches Bekämpfungsmittel nach einem der Ansprüche 7 bis 10, dadurch gekennzeichnet, daß es zusätzlich ein geeignetes landwirtschaftlich akzeptables Haftmittel enthält.

12. Biologisches Bekämpfungsmittel nach einem der Ansprüche 7 bis 11, dadurch gekennzeichnet, daß es zusätzlich ein chemisches Pestizid enthält.

13. Biologisches Bekämpfungsmittel nach Anspruch 12, dadurch gekennzeichnet, daß das chemische Pestizid aus einem Fungizid besteht.

14. Biologisches Bekämpfungsmittel nach Anspruch 13, dadurch gekennzeichnet, daß das Fungizid aus Pentachlornitrobenzol, N - (Trichlormethylthio) - 4 - cyclohexen - 1,2 - dicarbonoximid, p - Dimethylaminobenzoldiazo - Natriumsulfonat oder S - Ethyl - N - (3 - dimethylaminopropyl) - thiocarbamat besteht.

15. Biologisches Bekämpfungsmittel nach einem der Ansprüche 7 bis 14, dadurch gekennzeichnet, daß es zusätzlich einen anderen Mycoparasitenstamm enthält.

16. Verfahren zum Schutz von Sämlingen, Obst- oder Pflanzensamen gegen durch pathogene Bodenpilze hervorgerufene Krankheit, dadurch gekennzeichnet, daß man in den Boden, in dem die Sämlinge wachsen, eine wirksame Menge eines Mycoparasiten nach Anspruch 1 einarbeitet oder auf den Boden, in dem die Sämlinge wachsen, eine wirksame Menge eines Mycoparasiten nach Anspruch 1 appliziert.

17. Verfahren nach Anspruch 16, dadurch gekennzeichnet, daß man eine wirksame Menge des biologischen Bekämpfungsmittels nach einem der Ansprüche 7 bis 15 einarbeitet oder appliziert.

18. Verfahren zum Schutz von Pflanzen, Pflanzensamen, Obst oder Topfsämlingen gegen durch

13

pathogene Fusarium spp. Pilze hervorgerufenen Krankheiten, dadurch gekennzeichnet, daß man in den Boden, in dem Samen die Pflanzen wachsen, eine wirksame Menge von Trichoderma harzianum Rifai T-35 (ATCC Nr. 20691) einarbeitet oder auf den betreffenden Boden eine wirksame Menge Trichoderma harzianum Rifai T-35 (ATCC Nr. 20691) appliziert.

19. Mit dem biologischen Bekämpfungsmittel bzw. nach dem Verfahren gemäß einem der Ansprüche 7 bis 18 behandeltes Obst, behandelte Pflanzensamen und behandelte Topfsämlinge.

**Revendications**

1. Mycoparasite de l'espèce *Trichoderma harzianum* utile en tant qu'agent de lutte biologique et présentant une activité fongicide contre les champignons pathogènes au moins du genre *Fusarium* choisis parmi *Trichoderma harzianum* Rifai T-315 (ATCC N°. 20671) et *Trichoderma harzianum* Rifai T-35 (ATCC N°. 20691) ou un mutant de ceux-ci.

2. Mycoparasite selon la revendication 1, sous forme d'une culture stable biologiquement pure.

3. Mycoparasite selon la revendication 1, présentant en outre une résistance contre une certaine quantité d'un antagoniste chimique capable de retarder sensiblement la croissance d'autres champignons ou de les détruire.

4. Mycoparasite selon la revendication 3, dans lequel l'antagoniste chimique est un pesticide.

5. Mycoparasite selon la revendication 4, dans lequel le pesticide est un fongicide.

6. Mycoparasite selon la revendication 5, dans lequel le fongicide et le pentachloronitrobenzène, le N - (trichlorométhylthio) - 4 - cyclohexène-1, le 2-dicarbonoximide, le P - diméthylaminobenzènediazo sulfonate de sodium ou le S - éthyl N - (3 - diméthylaminopropyl) thiocarbamate.

7. Composition de lutte biologique comprenant une quantité efficace d'un mycoparasite selon l'une des revendications 1 à 5, et un véhicule approprié acceptable du point de vue agronmique.

8. Composition de lutte biologique selon la revendication 7, dans laquelle la concentration du mycoparasite est d'au moins $10^5$ spores par gramme de composition.

9. Composition de lutte biologique selon l'une des revendications 7 à 8, dans laquelle le mycoparasite est présent sous forme de conidies ou de chlamydospores ou de mélanges de celles-ci.

10. Composition de lutte biologique selon l'une des revendications 7 à 9, dans laquelle le véhicule comprend une base nutritive pour le mycoparasite.

11. Composition de lutte biologique selon l'une des revendications 7 à 10, qui comprend aussi un adhésif approprié acceptable du point de vue agricole.

12. Composition de lutte biologique selon l'une des revendications 7 à 11, qui comprend aussi un pesticide chimique.

13. Composition de lutte biologique selon la revendication 12, dans laquelle le pesticide chimique est un fongicide.

14. Composition de lutte biologique selon la revendication 13, dans laquelle le fongicide et le pentachlorobenzène, le N - (trichlorométhylthio) - 4 - cyclohexène - 1, le 2 - dicarboximide, le P - diméthylaminobenzènediazo sulfonate de sodium ou le S-éthyl N - (3 - diméthylaminopropyl) thiocarbamate.

15. Composition de lutte biologique selon l'une des revendications 7 à 14, qui comprend aussi une autre souche différente d'un mycoparasite.

16. Procédé de protection des plants, des fruits ou des graines végétales contre les maladies provoquées par les champignons pathogènes contenus dans le sol qui comprend l'incorporation ou l'application au sol dans lequel poussent les plants d'une quantité efficace d'un mycoparasite selon la revendication 1.

17. Procédé selon la revendication 16, qui comprend l'incorporation ou l'application d'une quantité efficace de la composition de lutte biologique selon l'une des revendications 7 à 15.

18. Procédé de protection des plantes, des graines végétales, des fruits ou des plants en pots contre les maladies provoquées par les champignons pathogènes du genre *Fusarium* qui comprend l'incorporation ou l'application au sol dans lequel poussent les plants ou les plantes d'une quantité efficace de *Trichoderma harzianum* Rifai T-35 (ATCC N° 20 691).

19. Fruit, graines végétales, plants en pots traités par le procédé selon l'une des revendications 7 à 18.

FIG. 1